# EUROPEAN PATENT APPLICATION

(11) **EP 3 113 016 A1**
(43) Date of publication of application: **04.01.2017**
(21) Application number: 15174379.6
(22) Date of filing: 29.06.2015
(51) Int. Cl.: G06F 9/44, G06F 11/36

(54) **TRACING DEPENDENCIES BETWEEN DEVELOPMENT ARTIFACTS IN A DEVELOPMENT PROJECT**

(71) Applicant: itemis AG, 44536 Lünen (DE)
(72) Inventor: GRAF, Andreas, 70619 Stuttgart (DE)
(74) Representative: Kalkoff & Partner

(57) **Abstract**

A method for managing traceability links 60 in a software development project and a computer readable medium are described. A plurality of surrogates 54, 56 is stored in a traceability management storage 52. The surrogates are associates with development artifacts 40, 46 including artifact content of at least one of the types chosen from requirement, design, code, test, test result, or issue. The development artifacts are of a plurality of different storage format types editable and/ or visualizable by associated development tools. The development artifacts are stored in artifact storage 44, 50 different from the traceability management storage 52.The surrogates comprise at least a first surrogate 54 for a first development artifact 40 and a second surrogate 56 for a second development artifact 46. Each of the surrogates 54, 56 comprises at least an identification, a type of the artifact content, and a storage format type of the associated development artifact 40, 46. The surrogate does not comprise the entire artifact content of the associated development artifact. At least one traceability link is 60 stored in the traceability management storage 52 comprising at least a pointer to the first and second surrogates 54, 56.

## Description

The invention relates to a method for managing traceability links in a development project, to a method for tracing dependencies of development artifacts by using traceability links, and to a computer-readable medium storing executable program code. More particularly, the invention relates to methods and software for managing and using traceability links to map dependencies between development artifacts in a development project, in particular in a software development project.

In a development project which comprises at least a software part, a plurality of different development artifacts may be created, generally as digital data. The development artifacts may contain content of different type, such as for example a definition of a system requirement or a software requirement, a definition of a software design, program code in a programming language, a test definition, a test result, etc.

These development artifacts may be stored as a plurality of different storage format types, such as e. g. file types, and may be generated, edited and/ or visualized by a plurality of different development tools associated with the storage format types. For example, a software development project may comprise development artifacts as different as a software requirements definition given in the Requirements Interchange Format (ReqIF) which may be edited for example with a ReqIF editor, a system design definition stored in UML format and edited with a development tool such as e.g. Enterprise Architect available from Sparx Systems, program code in C format edited by a code editor, or a test definition stored e.g. as an excel file editable with Microsoft Excel.

There can be different inter-relations between development artifacts in a software development project. For example, an artifact containing test results may be dependent on an artifact defining the test conditions, a software design artifact may be dependant on the software requirement artifact that it implements, etc. In the case of a change to one development artifact, interrelated artifacts may require adaptation. The ability to trace the inter-relations of development artifacts may be referred to as traceability.

Traceability may be achieved e.g. by modifying development artifacts to include information listing interrelated development artifacts as additional content. However, this modification complicates the development process and is not very flexible.

US 2008/0263505 A1 describes automated management of software requirements verification. A software development project is established and requirements for the project are defined based on requirements information captured from a requirements source. For each requirement, source code developed for the requirement is associated. Procedures identified in the source code are mapped to the defined requirements and the requirements are verified based on analysis results, code coverage measurements, system testing and unit testing performed on the mapped procedures.

US 8,312,418 B2 relates to model-driven software development. Traceability is referred to as the logical linkage between a design requirement and a model element in the resultant model, and to source code produced as an implementation of the model element. A method of visualization of implicit relationships in a trace query issues a model query, retrieves an implicit relationship in response to the model query and generates a trace link for the implicit relationship.

It is an object of the present invention to propose a method and an executable program for efficiently handling the management of traceability links and assisting in easily tracing dependencies of development artifacts in a development project.

This object is solved by a method for managing traceability links in a development project according to claim 1, by a method for tracing dependencies of development artifacts according to claim 12, and by a computer-readable medium storing executable program code according to claim 14. Dependent claims refer to preferred embodiments of the invention.

The method according to the invention is a computer-implemented method which may be implemented as software, i.e. by means of program code or other instructions executable on at least one computer to automatically operate according to the inventive method. A computer or a plurality of computers executing the software may be referred to as a traceability management system.

According to the invention, a plurality of surrogates for development artifacts is stored in a traceability management storage. The development artifacts to which the surrogates are related are products of a development project which comprises at least a software part. Here, and in the following, the term "software development project" will be used for development projects wherein at least a part of the development artifacts produced are software. Such software development projects may also include development artifacts which relate to hardware.

The development artifacts of the software development project are stored as digital data in one or more artifact storage locations. Separately therefrom, the surrogates are stored in a traceability management storage. Both types of storage may include any type of known physical storage devices for digital data, such as volatile, e. g. RAM, and non-volatile memory, e.g. harddrives, flashdrives or any other type of storage technology. The storage maybe local to at least one computer executing the computer-implemented method, or may be remote therefrom, accessible via a network, bus or any other connection. Thus, both execution of the software and storage may also be cloud-based, i.e. on one or more remote servers. Development artifacts may be stored in files, wherein one file may contain multiple artifacts. Alternatively, development artifacts may also be stored in databases, etc. The separation between the artifact storage and traceability management storage is of a logical nature, thus physically both types of digital data may reside on the same device.

The development artifacts contain artifact content of different types. For a software development project, this includes at least one, preferably at least two or more of the types requirement, design, code, test, test result, or issue.

Artifacts of the requirement type may comprise definitions of requirements of the software development project or of modules thereof. The requirements may be of different types, such as e.g. business requirement, software requirement, etc. Artifacts of the design type comprise content related to the design of the software development project or modules thereof. There may be different types of design artifacts, such as e.g. software design, system design, etc. Artifacts of the code type comprise programming code in a programming language. Logical portions, such as e.g. multiple function definitions contained in a common code file, may each constitute separate code type artifacts. Artifacts of the test type comprise definitions of tests to be conducted with the developed software of modules thereof. There may be different kinds of test type artifacts, such as e.g. test scenario artifacts describing a sequence of steps to be conducted as a test, and test case artifacts containing as artifact content a definition of test conditions. Artifacts of the test result type contain as artifact content the results of tests conducted. Artifacts of the issue type contain a description of problems, errors or other observations encountered by users of the developed software product.

In preferred implementations of the method according to the invention, also artifacts of one or more further types of artifact content may bestored, such as e.g. use case, change request, feature request, deployment, user story, builds, releases, project plan, sprint, system, epic, insight, specification, or scenario..

A use case artifact contains a specification of a use case, i.e. a transaction or user interaction to be conducted with the developed software product. Artifacts of the change request or feature request type comprise as artifact content a description of a requested change or requested additional feature for the software product or a module thereof. A deployment artifact comprises as artifact content information related to installing a software product in a hardware and/or software system, e.g. instructions to be followed for deploying the software, such as e.g. installation rules, scripts, etc.

An artifact of the user story type is a description in everyday or business language of a user that captures what a user does or intends to do when using the developed software product. An epic type artifact may contain a number of user stories as artifact content. An artifact of the release type is a description or listing of versions and/or modules for release of a software product, such as e.g. a listing of software modules with version numbers. A project plan artifact contains as artifact content elements of a project plan, such as e.g. project objectives to be achieved and time limits for products, milestones, activities and resources of a project. A sprint artifact is related to the term "sprint" as a time period in a development project, such that a sprint artifact may contain as artifact content a number of development tasks to be completed within the sprint time period.

An artifact of the system type contains as artifact content a description of a system comprising e.g. hardware and operating software elements. An insight artifact may contain a description of a necessary or advantageous condition or prerequisite, and thus may be a type of recognized requirement. An artifact of the specification type may broadly comprise any type of specification as artifact content. Artifacts of the scenario type comprise a description of a sequence of actions, such as e.g. a use scenario specifying a sequence of user interactions or a test scenario describing a sequence of test steps to be conducted.

The development artifacts may be stored in a plurality of different storage format types, for example file types or database storage object types. Different development tools may be used to access the development artifacts stored in a storage format type associated with each development tool to be able to visualize or edit the development artifact. For example, a test definition for a software module may be stored in a portion of a spreadsheet file which may be visualized and edited by using a spreadsheet program such as e.g. Microsoft Excel as a development tool. As a further example, a software requirement may be defined and stored in a ReqIF-format editable by a ReqIF-editor, or C code may be stored in a code file editable by a code editor.

The surrogates stored in the traceability management storage correspond to the development artifacts. According to the invention, this includes at least a first surrogate for a first development artifact and a second surrogate for a second development artifact. Ideally, for each development artifact in the software development project, or at least for each development artifact in a portion of the project that is managed according to the inventive method, there is one surrogate.

The surrogates are not parts of the artifacts, but are stored as separate representations thereof. Each surrogate comprises at least an identification of the associated development artifact, such as e.g. a pointer, storage location path, data base address, url, unique identifier or other means to identify the development artifact associated with the surrogate.

The surrogates do not contain the entire artifact content of the associated development artifact, but preferably include substantially less data, most preferably only a small fraction of the data of the original artifact.

Each surrogate comprises a type of the artifact content of the associated development artifact, and a storage format type thereof. In addition, as will be described in greater detail below and with regard to preferred embodiments of the invention, the surrogates may comprise at least one, preferably multiple attributes. The attributes stored with the surrogate preferably reflect portions of the artifact content which are relevant to traceability, i.e. for the inter-relations between different development artifacts.

According to the invention, at least one traceability link is stored in the traceability management storage. Preferably, a plurality of traceability links are stored. Each traceability link comprises at least a pointer to the first and second surrogates to identify these and to allow access thereto. Traceability links may be stored as one-directional or bi-directional links between the surrogates, thereby indicating a corresponding inter-relation between the referenced original artifacts.

The method according to the invention thus allows to efficiently handle traceability information in a traceability management storage. All traceability information of parts of a software development project, or even of the whole software development project, may be handled by storing surrogates and traceability links in a separate traceability management storage. This in particular allows to handle traceability links reflecting inter-relations between artifacts of different types, which are maintained by different development tools.

By storing surrogates instead of either accessing the original artifacts directly or storing full copies thereof, the handling is rendered most efficient in terms of memory usage and accessibility. As will become apparent from the following description of preferred embodiments, the stored surrogates and/or the traceability links may be accessed during different operations, for example in an impact analysis to determine the impact of a change effected to one artifact on other artifacts inter-related therewith, or in a coverage analysis determining whether each artifact of one type, such as requirement, is covered by an artifact of another type, such as test. Such operations may be very efficiently conducted in the dedicated traceability management storage, without a need to access the original development artifacts.

A further major advantage of storing surrogates is that the entire management of traceability links may be non-invasive for the original artifacts, i.e. does not necessitate changes to the content of the artifact itself. The surrogates and/ or the traceability links may be automatically generated by read-only access to the associated development artifacts. Any storage of information or metadata concerning traceability may then be effected in the traceability management storage only without any modification to the artifacts in the artifact storage. An automatic process of creation, update, and/ or re-creation of the surrogates from the original artifacts may be manually triggered, or automatically triggered by an event such as a change effected to an artifact, or may be effected periodically. Thus, the risk of outdated or inconsistent data is avoided.

Therefore, the method and the executable program according to the invention allow effective management of traceability for very different types of artifacts, even for those artifacts maintained by development tools that do not natively support traceability features.

In one embodiment, the surrogates may contain one or more attributes representative of a portion of the artifact content of the associated development artifact. The attributes may e.g. be values of different type (for example Boolean, string, numerical, date, etc.) which are stored with the surrogate. The attribute values may be obtained by extracting data from the original artifact content. The attributes may be accessed directly in the traceability management storage without the necessity to access the original artifact.

Generation or extraction of attributes from original artifacts may be automatically effected by providing an attribute extraction rule and applying the attribute extraction rule to automatically extract one or more attributes from the artifact content. The extraction rule may be provided as an instruction or a set of instructions executable or interpretable by the traceability management system. For example, attribute extraction rules may specify a portion of the artifact content from which an attribute value may be read.

According to a preferred embodiment, development artifacts may be accessed through an adapter specific to their storage format type or through an access interface of a development tool associated with their storage format type. Through both of these methods, it is possible to access the artifact content of different types of development artifacts maintained by different development tools and stored in different artifact storage locations. The artifact content may be accessed directly at the artifact storage through an adapter specifically enabled for (at least read-only) access to the storage format type, for example file type or database object type. By using different adapters, the traceability management system may therefore be enabled to access artifact content of development artifacts of a plurality of different storage format types.

Alternatively, access may be effected through a development tool associated with the storage format type of the development artifact. For example, if a development tool such as an editor comprises an application programming interface (API), this may be used to direct the development tool to access an artifact, e.g. to read the artifact content. Through this access, at least a portion of the artifact content may be extracted to create or update a corresponding surrogate. If the development tool does not have a native API, an access interface may be provided by a plug-in to the development tool.

In a preferred embodiment, relationship information created and/or managed by a development tool may be accessed. Some development tools allow to create, store, and/ or maintain relationship information linking two development artifacts both editable and/or visualisable by the same development tool. This relationship information may comprise traceability links, but also other types of relationship information between two or more artifacts.

Relationship information created and/or maintained by a development tool and stored in an artifact storage location may be accessed, and a representation thereof may be stored as a traceability link in the traceability management storage. Thus, information already generated in the development tool may be used to automatically create traceability links in the traceability management storage. A representation stored in the traceability management storage may be a new traceability link, or may alternatively be a reference to the relationship information stored in the artifact storage location.

In one preferred embodiment, the method, system and software product according to the invention may assist a user in navigating through artifacts in the project. According to one embodiment, a development tool may be accessed through an access interface to obtain information about a current viewing and/or editing focus on an artifact currently edited or viewed within the development tool. The traceability management system may then obtain and display information about at least one artifact linked to the development artifact within the focus. Thus, the traceability management system may monitor the focus of a development tool and assist the user by displaying traceability information related to the development artifact in the current viewing or editing focus. For example, for a development artifact, like e.g. a portion of source code currently edited, the traceability management system may display a list of traceability links, or a list of linked development artifacts to enable the user to identify inter-relations of the currently edited development artifact with other development artifacts.

According to a further preferred embodiment, the traceability management system may also be used to navigate between linked development artifacts. In one preferred embodiment, a representation of a development artifact may be displayed. Also, representations for a plurality of related development artifacts may be displayed, such as e. g. in a list, or in a graphical representation showing the structure of traceability links between the represented development artifacts, e. g. a tree structure.

If a user input, such as e.g. a mouse selection (click) is received that is directed to the representation of a development artifact, a development tool associated with the storage format type of the development artifact may be accessed to visualize and/or edit the development artifact. For example, the traceability management system may direct an editor to open the development artifact for editing. Further, the traceability arrangement system may place the editing focus onto the selected artifact. This helps the user to navigate among the artifacts, and in particular greatly facilitates to make changes to a number of development artifacts in the project which are linked by traceability links.

Traceability links may be manually generated and stored in the traceability management storage. This may e. g. be effected in a user interface of the traceability management system allowing the user to specify the linked artifacts and the type of the traceability link to be created.

Additionally, according to a preferred embodiment of the invention, traceability links may also be automatically derived. Preferably, this may be effected based on at least one derivation rule for deriving a traceability dependency between at least two development artifacts. Such derivation rules may for example include instructions to access the artifact content of the development artifacts. Preferably, the derivation rule may access the surrogates instead of the original development artifacts. Based on the data obtained from the development artifact or from the surrogate, a comparison specified in the derivation rule may be made, and a traceability dependency may be identified between the artifacts based on the result of the comparison. After such a traceability dependency is identified by application of the derivation rule, a traceability link between the surrogates may be created and stored, linking the two development artifacts between which a traceability dependency has been identified. Automatic creation of traceability links greatly facilitates managing of dependencies between development artifacts. By specifying appropriate derivation rules, a large number of traceability links need not be created manually, but can be automatically derived by application of the rules.

Preferably, the derivation rules may access attributes stored in the surrogates. This renders the operation of the traceability management system and method very efficient, if no access to the original artifact is required and the determination whether a traceability dependency between two artifacts exists can be based on the data stored with the surrogates.

A derivation rule may comprise an instruction or a set of instructions which may be executed, interpreted, solved or otherwise automatically processed by the traceability management system. In a preferred embodiment, a derivation rule comprises at least one condition including a relational operator to identify the traceability dependency. For example, the derivation rule may comprise accessing one or more values from a development artifact or surrogate thereof, optionally combining the values, and comparing the result with values or combined values obtained from another development artifact or surrogate thereof. An example of the application of a derivation rule will be given in the detailed embodiments.

The stored traceability links may be used in a method for tracing dependency of development artifacts in a development project. If a change is made to at least one development artifact, the impact of this change on other development artifacts of the development project may be determined by following the traceability links stored in the traceability management storage.

A change made to a development artifact may be detected automatically or indicated manually. For example, if an artifact is edited by a developer and the changed development artifact is stored in the artifact storage, the software developer may manually flag the development artifact as changed, or may trigger an automatic comparison to determine whether a relevant change has been made to the development artifacts. Also, a comparison may be automatically or periodically triggered. Within the traceability management storage, the changed artifact may then be flagged as "suspicious", i.e. potentially causing required adaptation of related artifacts.

Starting from the suspicious development artifact, related development artifacts which may potentially be affected by the change may be determined by identifying traceability links stored in the traceability management storage between the changed development artifact and the related development artifacts. Either these traceability links or the connected development artifacts, or both, may then be flagged as "suspicious", i.e. potentially requiring adaptation. This indication may be effected by setting a flag indicating the "suspicious" state of the development artifact or traceability link.

Thus, starting from one changed development artifact, further suspicious development artifacts may be identified by following the stored traceability links. The flags indicating the ""suspicious" state may potentially be stored as part of the surrogates or traceability links, but are preferably stored separately, for example in a separate data set in the traceability management storage.

Generally, any change to an original development artifact may be detected and require the status of the development artifact to be set to "suspicious", such that in an impact analysis the status of associated traceability links and/or connected development artifacts is also set to "suspicious". However, it is preferred to change the status only in case of relevant changes. Relevancy of certain types of changes may be determined beforehand. In preferred embodiments, only changes to the artifacts content that result in a change of the data stored in the surrogate may be considered relevant for a suspicious state. The surrogates may contain change-relevant attributes, and flagging of traceability links and/or of connected development artifacts as suspects for a necessary adaptation if effected only if at least one of the change-relevant attributes has changed. The surrogates may contain further attributes determined beforehand to be not change-relevant, such that a change to these further attributes does not lead to flagging of the traceability links and/or of the connected development artifacts as suspects. This renders impact analysis and the tracing of dependencies between development artifacts more efficient.

In the following, exemplary embodiments of the invention will be described with reference to the drawings, in which
- fig. 1: shows a schematic representation of a traceability management system;
- fig. 2: shows a diagram of development artifacts in artifact storage locations and surrogates and traceability links stored in a traceability management storage;
- fig. 3: shows a structural diagram of surrogates linked by a traceability link;
- fig. 4: shows a diagram illustrating access by a traceability management system to development artifacts through adapters;
- fig. 5: shows a diagram of development artifacts and traceability links stored in artifact storage and surrogates, traceability links and representations of traceability links stored in a traceability management storage;
- fig. 6: shows a diagram of artifacts, surrogates and traceability links used in impact analysis;
- fig. 7: shows an exemplary screen of a traceability management system;
- fig. 8: shows a diagram of a software design for an example of a software development project;
- fig. 9: shows a diagram of a system design of the example software development project of fig. 8;
- fig. 10: shows a diagram of development artefacts of the example software development project of fig. 8, 9 and their dependencies;
- fig. 11-13: show exemplary screens of a traceability management system for the example software development project of figs. 8 - 10.

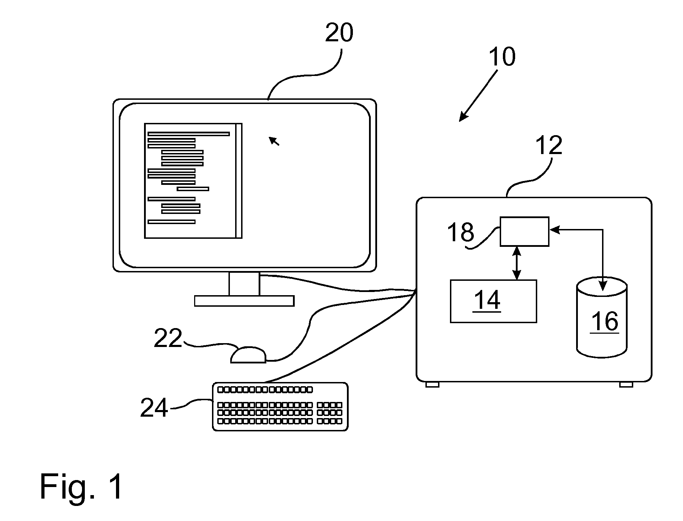

Fig. 1 shows a schematical representation of a computer system 10 comprising a central unit 12 with volatile storage as primary memory 14, non-volatile mass storage 16, and a CPU 18 for executing programs. Connected to the central unit 12 are a screen 20, a keyboard 24 and digitizer (mouse) 22. The depicted computer system 10 and its components should be understood exemplary of a system disposed to execute software stored e.g. in non-volatile memory 16, thereby processing user input from the input devices 22, 24 and displaying information on screen 20. During execution of the software, data stored in volatile memory 14 or non-volatile memory 16 is accessed and processed. In addition, or alternatively to the depicted types of memory, also data stored in remote locations accessible e.g. via a computer network may be accessed and processed. Likewise, a number of further computer systems (not shown) may have access to the same storage, so that processing of data may be distributed.

The computer system 10 shown in fig. 1, and optionally further computers with access to common storage, are disposed to be used by software developers working on a software development project for developing a software product. A number of development tools are installed on the computer system 10 to create and edit artifacts in the development process.

A software development project comprises artifacts of different types, for example system requirement, software requirement, design, code, test, or issue. Each artifact is stored as digital data in a storage such as e.g. in the form of a file in non-volatile storage 16 or as a database object. Each file or database object may generally comprise several artifacts. Each stored artifact has a corresponding file type or database object type which is here referred to as storage format type. For example, a number of system or software requirements, each representing a separate artifact, may be stored as a file in ReqIF format. Program code for a number of functions or modules, each representing a separate artifact of the code type, may be stored in a code file. Test result values, each representing a separate artifact of the test result type, may be stored in locations defined as sheet, row and column addresses inside a spreadsheet file.

For each type of artifact and storage format type accessible on the computer system 10 a development tool can be installed, for example a code editor for the program code stored in the code file, a spreadsheet software for the test results in the spreadsheet file, and a ReqIF editor for the requirements definitions stored in ReqIF format.

In addition to these development tools, a traceability management software is installed on the computer system 10, which may thus be referred to as a traceability management system 10. The purpose of the traceability management software is documentation and maintenance of traceability information between development artifacts. Traceability information may be used in a number of different types of analysis, for example in impact analysis to determine the impact of a change made to an artifact, or coverage analysis to determine whether artifacts are covered by other artifacts, such as tests therefor. Due to the increasing complexity of today's systems, manual tracking of inter-relations between development artifacts is not practical and reliable enough.

In the following, exemplary embodiments of operations, functionalities and features of the traceability management software will be further explained.

The traceability management software allows to create and manage traceability links between development artifacts of the software development project, even if the development artifacts are of different artifact type, different storage format type, and edited, visualized or maintained by different development tools. Traceability links serve to indicate an inter-relation between development artifacts, indicating that one artifact may be dependent on another artifact, such that, if one artifact is changed, the other artifact could be outdated and may require adaptation.

For example, a first artifact may be of the test type, and may comprise as artifact content the definition of a test for a software module. A second artifact of the test result type, containing as artifact content the result of the test conducted according to the definition in the artifact content of the first artifact, will be dependent on the first artifact. If the first artifact is changed, i. e. the test definition is changed, then the second artifact becomes outdated, i. e. the test must be conducted again according to the changed test definition.

Such relationships may exist between artifacts of the same type (e. g. a code artifact containing a function definition may be dependent on another code artifact calling the function), or between artifacts of different types (e. g. test/test result; requirement/software design, etc.).

The traceability management system implements management of traceability information by creating surrogates for original artifacts, and storing the surrogates in a separate traceability management storage. The original artifacts remain unmodified and may continue to be maintained and edited by their respective software development tools. If artifacts need to be linked, the corresponding development tools need not provide means for creating, storing and documenting the trace information. Traceability links are therefore created in the separate, dedicated traceability management system and stored in a separate traceability management storage.

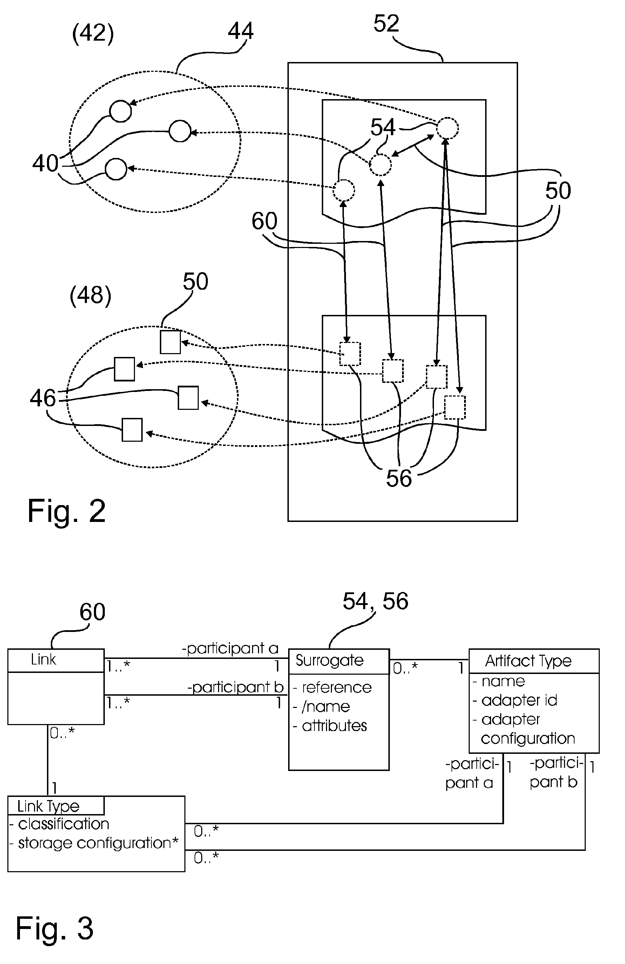

In fig. 2 are shown for illustration purposes schematic representations of development artifacts 40 of a first artifact type, editable by a first development tool 42 and stored in a common artifact storage location 44. Further, development artifacts 46 of a second artifact type are stored in a separate artifact storage location 50, editable by a second software development tool 48.

The traceability management software stores data in a traceability management storage 52, which is at least logically separate from the artifact storage locations 44, 50. Stored in the traceability management storage 52 are surrogates 54, 56 of each of the artifacts 40, 46 stored in the artifacts storage locations 44, 50. The surrogates 54, 56 are representations of the original artifacts 40, 46.

Further, bi-directional traceability links 60 are stored in the traceability management storage 52. Each traceability link 60 links one surrogate 54, 56 to another surrogate 54, 56. As explained above, each artifact with its artifact type and artifact content is stored in the form of the respective storage format type (here represented by the corresponding shapes as circles or rectangles) in the respective artifact storage location 44, 50 as digital data. Each surrogate 54, 56 represents an original artifact 40, 46, but does not include the artifact content thereof.

Fig. 3 shows the structure of traceability links 60 and surrogates 54, 56. Each surrogate 54, 56 includes as stored data an artifact type of the referenced original artifact 40, 46. The artifact type includes the name of the artifact type as well as further data which allows to access the artifact, namely an adapter ID and an adapter configuration. Adapters will be explained below.

Besides the artifact type, each surrogate 54, 56 contains a name, a reference to the original artifact 40, 46, and one or more attributes. Attributes stored with the surrogate in the traceability management storage 52 may be parts of the artifact content of the original artifact 40, 46, or may be derived therefrom. Also, attributes may be metadata for the original artifacts 40, 46. For example, attributes of a surrogate 54, 56 may be values of different types, such as Boolean, string, numerical etc.

Each traceability link 60 comprises two surrogates 54, 56 as participant a and participant b. Further, each traceability link 60 has one link type. Each link type includes an artifact type of a first surrogate as participant a and a second surrogate as participant b. For example, such link types may comprise a type linking artifacts of the software requirement type with artifacts of the software design type. Further link types may e.g. comprise code/ code, system design/ software design, test scenario/ test case, etc.

Further, each link type includes a classification i.e. a label of the link type, and at least one storage configuration indicating a storage mode and/or location of the traceability link, e.g. separately for differently generated traceability links which may be, as will be further explained, manually created, automatically derived, or imported.

The surrogates 54, 56 are automatically created by the traceability management system 10. The process of first creation of the surrogates 54, 56 from the original artifact 40, 46, or of updating the surrogates 54, 56 from changed original artifacts 40, 46 may be triggered manually or automatically. The traceability management system 10 then accesses the artifact content of the original artifacts 40, 46 to read the artifact content and automatically create the surrogates 54, 56. The data stored with the surrogates 54, 56 is automatically derived from the original artifacts 40, 46. The artifact type, reference to the storage location and the name of the surrogate are automatically captured. The attributes of the surrogate are automatically derived from a read access to the artifact content.

Access to the original artifacts 40, 46 is effected as read-only access. The original artifacts 40, 46 are not changed, so that the entire management is conducted in the traceability management storage 52 and remains non-invasive for the original artifacts 40, 46.

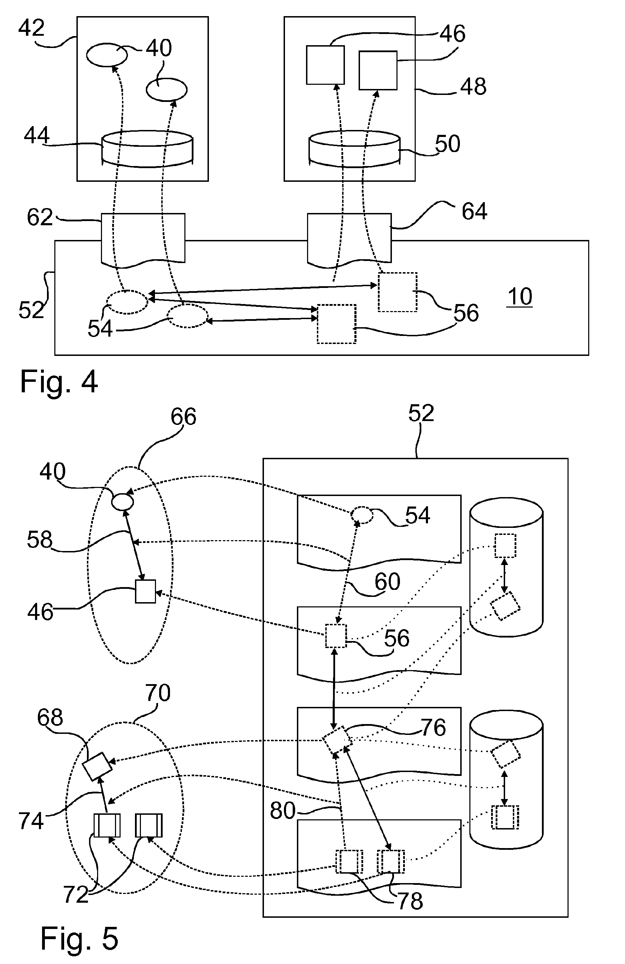

Fig. 4 schematically illustrates access to artifacts 40, 46 of different type by the traceability management system 10. Original artifacts 40 of a first type maintained by a first development tool 42 are stored in the first artifact storage 44, and original artifacts 46 of the second type, maintained by the second development tool 48 are stored in the second artifact storage 50.

In order to access the artifact content of the different artifacts 40, 46, adapters 62, 64 are provided for the traceability management system 10. The first adapter 62 allows a direct read access of the artifact content of the artifacts 40 of the first type and the second adapter 64 allows a direct read access to the artifact content of the artifacts 46 of the second type. Both of the adapters 62, 64 are specifically designed software modules of the traceability management system 10 which can physically access the stored artifacts 40, 46. Each adapter 62, 64 comprises a specialized adapter configuration for the storage format type of the artifacts 40, 46, so that the artifact content stored in the known structure of the artifact storage type can be accessed.

By means of the read access thus achieved, the surrogates 54, 56 are created or updated. Examples of rule-based processing of artifact content to automatically obtain attribute values of the surrogates 54, 56 will be described below.

In some cases, development tools may be able to maintain information regarding relationships between artifacts maintained by the development tool. This may be traceability information or other types of relations, such as e. g. SpecRelations defined in RegIF, or Relationships defined in UML. This relationship information maintained by multiple different tools, and in different storage locations, may be accessed and aggregated by the traceability management system 10.

Fig. 5 shows an example of two different types of original artifacts 40, 46 stored in a common storage location 66 maintained by a first development tool. A stored relationship 58 created by means of the software development tool, linking the artifacts 40, 46, is also stored in the artifact storage location 66. As explained for the example of fig. 2, surrogates 54, 56 can be automatically created and stored in the traceability storage 52.

Additionally, the relationship information 58 is also accessed by the traceability management system 10 and a corresponding traceability link 60 linking the surrogates 54, 56 is created and stored in the traceability management storage 52.

In a further artifact storage location 70 maintained by a different development tool, artifacts 68, 72 and relationship information 74 are also accessed and corresponding surrogates 76, 78 as well as traceability link 80 created and stored in traceability management storage 52.

Thus, the traceability management system 10 may aggregate traceability information natively stored in the traceability management storage 52 with relationship information read and/ or imported from different development tools as shown in fig. 5. This may be used, as shown in fig. 5, to provide an aggregated view of traceability information between surrogates 54, 56, 76, 78 for a large number of different original artifacts 40, 46, 68, 72 of different types without distinction of the development tools that maintain the artifacts. Thus, traceability information or other types of relationship information existing in different software development tools may be re-used. However, instead of the limited scope of information maintained in only one of several software development tools used in the software development project, the traceability management system 10 offers the possibility of end-to-end analysis of traceability and relationship information maintained by different tools. Thus, also distributed work on traceability data is enabled.

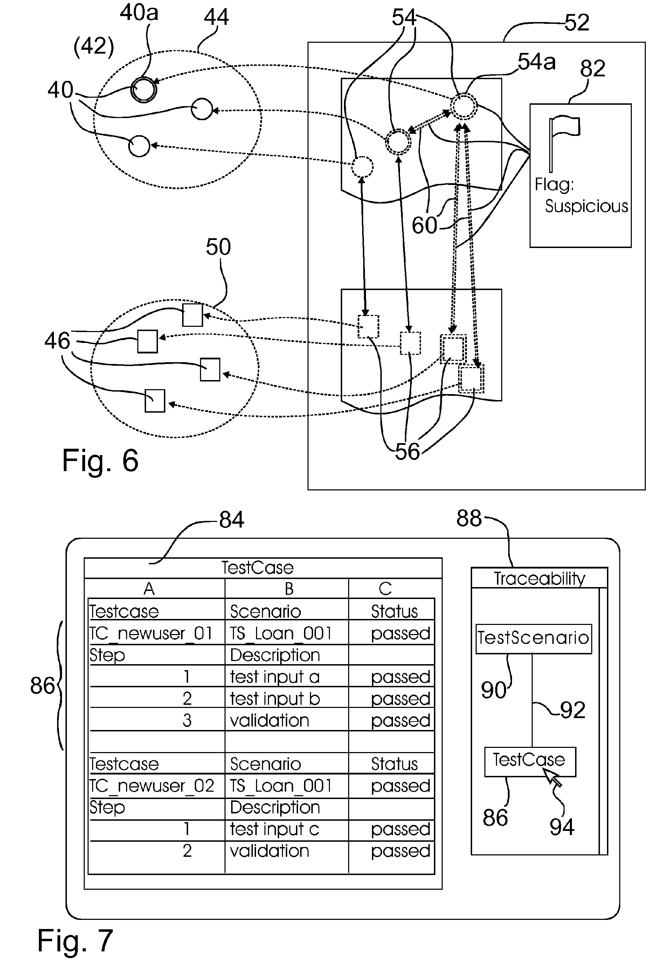

The traceability information stored by the traceability management system 10 can be used in an impact analysis to determine the impact of a change made to one development artifact on other development artifacts. Fig. 6 illustrates an example of original artifacts 40, 46 and corresponding surrogates 54, 56 corresponding to fig. 2. In the example it is assumed that a developer modifies a first development artifact 40a by using the associated software development tool 42 and stores the modified development artifact 40a in the artifact storage 44.

An update of the traceability information stored within traceability management storage 52 is triggered, e.g. manually or automatically. The traceability management system 10 then accesses the original artifacts 40, 46 to update the corresponding surrogates 54, 56. In the case of the modified development artifact 40a, the traceability management system 10 detects a change by comparison to the previously stored surrogate 54 and creates a changed surrogate 54a. Additionally, the traceability management system 10 creates an impact analysis data set 82 in traceability management storage 52 including a flag indicating the changed, and now updated surrogate 54a to have a "suspicious" status.

In the following steps of the analysis, the impact of the change to the original artifact 40a on the traceability links 60 to other artifacts 40, 46 is determined. The traceability management system 10 analyzes all stored traceability links to identify those traceability links 60 linking the changed surrogate 54a to other, connected surrogates 54, 56. These connected surrogates are determined to potentially require adaptation. Consequently, in the separate impact analysis data set 82, a flag is set for each of the traceability links 60 comprising the suspicious surrogate 54a as one participant marking them as "suspicious".

In the further development work following the impact analysis, the developer then checks all development artifacts 40, 46 whose surrogates 54, 56 are connected by the suspicious traceability links 60 whether or not they require adaptation to the change effected to the related artifact 40a. After effecting the necessary adaptation, or after determining that no such adaptation is required, the developer may delete the suspicious flag for the connecting traceability link 60.

If in the course of the required adaptation a connected artifact is modified, a further impact analysis may be triggered to determine whether the effected adaptation may have an impact on further connected development artifacts, which in turn may require adaptation. This further impact analysis is carried out in the same way as described above.

A further type of analysis that may be conducted by the traceability management system 10 may be a coverage analysis. In a coverage analysis, the coverage of each artifact of a first type, e. g. requirement, by an artifact of a second type, e. g. test, may be analyzed. Coverage analysis may be effected entirely within the traceability management system 10 and traceability management storage 52 without accessing the original artifacts. Each artifact of the first type is identified and the traceability links including the surrogate of the identified artifact as participant are analyzed to determine coverage, i. e. whether or not the first artifact is covered, e. g. verified, by an artifact of the second type. The analysis results may be displayed and/or stored at separate data sets, e. g. flagging those artifacts or surrogates of the requirement type not verified by an artifact or surrogate of the test type as unverified.

In addition to the main use of the traceability management system 10 for assembling, maintaining, documenting and managing traceability information, the traceability management software executed on the computer system 10 in parallel to one ore more development tools may also present information to the developer or facilitate navigation between development artifacts.

Fig. 7 illustrates an example screen showing a first window 84. The first window 84 is the window of a software development tool, in the shown example a spread sheet application such as Microsoft Excel, visualizing and editing a file containing artifacts of the type test case. In the example shown, the editing focus is e.g. on the second line of the spread sheet, corresponding to the artifact content of a test case type artifact 86.

As the software developer edits the test case artifact 86, the traceability management software accesses the software development tool, in this case e.g. Microsoft Excel via an access interface such as an API to obtain information on the current editing focus. As illustrated, the spreadsheet file opened for editing comprises multiple artifacts of the test case type. The currently selected cell of the spreadsheet is analyzed to determine the actually edited artifact 86.

As the traceability management system thus identifies the artifact 86, it displays in a second window 88 traceability information retrieved from traceability management storage 52 related to the artifact 86. In the example of fig. 7, the traceability management software displays in the traceability window 88 a graphical representation of the currently edited artifact 86 and additionally displays related artifacts 90 and traceability links 92 linking the currently edited artifact 86 to the related artifacts 90. Thus, the developer is informed during editing of the artifact 86 about other artifacts 90 related thereto.

In addition to displaying traceability information while an artifact 86 is edited, the traceability management software may also help the software developer to navigate among software development artifacts of the software development project. For example, the user may use a mouse pointer 94 to select, in the traceability window 88, an artifact 86. The traceability management system 10 then accesses the associated development tool, such as e.g. Microsoft Excel, to open the associated development artifact 86 in the first window 84 for editing. The traceability management software determines the associated software development tool, accesses the software development tool e. g. through an API or binary interface to open the relevant file for editing, and places the editing focus on the relevant cell of the opened file.

In the following, some of the operations, functionalities and features of the traceability management software will be explained in further detail with relation to an example software development project. The example software development project relates to a software product for a bank to process loan applications both for new and already existing users/ customers. In order to be illustrative, the example only comprises a very limited number of artifacts, and only some of these artifacts will be further explained here.

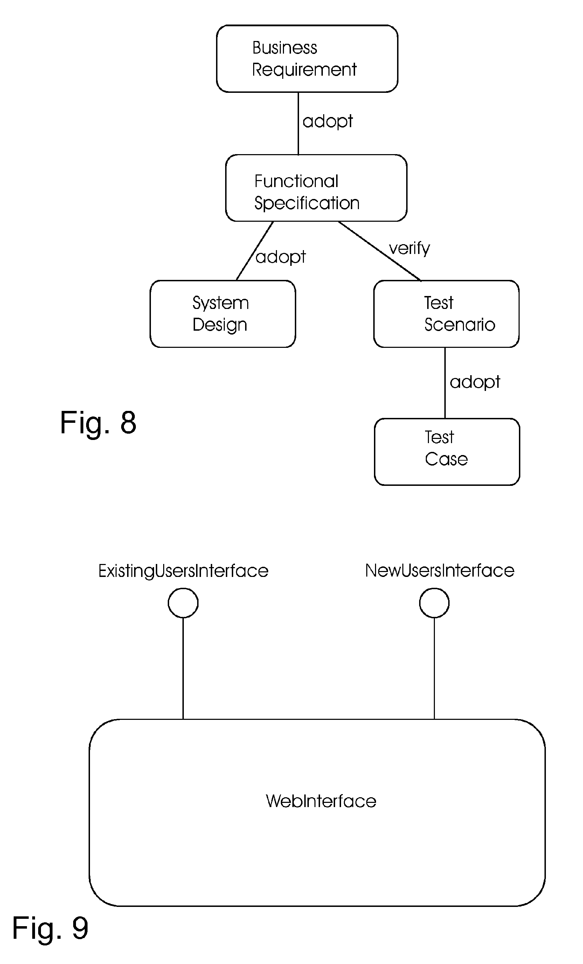

Fig. 8 shows a structure of different artifact types of the example software development project, including artifacts of the business requirement type, functional specification type, system design type, test scenario type and test case type. The different types of development artifacts may be dependent on one another as indicated in fig. 8. For example, a functional specification may adopt a business requirement, a test scenario may verify a functional specification, a test case may adopt a test scenario, etc.

In the example, the artifacts of the business requirement type may be defined e.g. as the following table which may be stored in ReqIF format:

| no. | name | description |
|---|---|---|
| 1 | Loan Process | The loan system must cater to both existing and new users. For new users, it should provide a way to apply for a loan. For existing users, it should be able to access previous loan information. |
| 2 | Ease of Use | All the information should be easy to access. Administrative changes should be able to be made through a web interface. |
| 3 | Integration with the Bank User List | The loan customers and other bank customers' list has to be merged but identification of the loan customers should be unique. |

The above business requirements may be edited in a ReqIF editor and stored in a ReqIF file. Each of the three requirements defined therein constitutes a separate development artefact.

Artifacts of the functional specification type may e.g. be defined in a text as in the following example:
1. Loan Process
   1.1 New Users
      The new users can access the bank URL...
   1.2 Existing Users
   The existing users are the ones who have previously applied...
2. Ease of Use
   2.1 All of the information should be accessible in less than three clicks for a user

The functional specification artifacts may be stored in a text file which may be edited by a text editor or text processing software as software development tool. Each of the numbered functional specification definitions given in the above example constitute separate development artifacts of the functional specification type.

Fig. 9 shows a diagram as a representation of a system design of the web interface, including separate interfaces for existing users and new users. The corresponding definition of the shown system design may be e.g. stored in UML format in a file or database entry and edited by a system design editor.

Artifacts of the test scenario type may be defined in separate lines in a spreadsheet document, e.g. as follows:

| | A | B |
|---|---|---|
| 1 | Scenario | Test Objective / Test Scenarios |
| 2 | TS_Loan_001 | Validate the "Apply Loan" Feature as a new User |
| 3 | TS_Loan_002 | Validate the "Apply Loan" Feature as an existing User |
| 4 | TS_Loan_003 | For a new User in the "Apply Loan", check... |
| 5 | TS_Loan_004 | For an existing User in the "Apply Loan", check... |
| 6 | TS_Loan_005 | Log-in to Loan Portal as ... |
| 7 | TS_Loan_006 | Check the Loan with Status "Sent for Review" |
| 8 | TS_Loan_007 | Check the Loan with Status "Reviewed and Approved" |
| 9 | TS_Loan_008 | Check the Loan with Status "Reviewed and Deleted" |
| 10 | TS_Loan_009 | Check for a Visitor if... |
| 11 | TS_Loan_010 | Check for a registered User ... |
| 12 | TS_Loan_011 | Check for a Banker if ... |

The above table is stored as a spreadsheet file. Each of the individual lines represents separate development artifacts of the test scenario type.

Test cases may also be defined in a spreadsheet, as shown in the first window 84 of fig. 7.

Each test case comprises a number of steps to be conducted for a specified scenario.

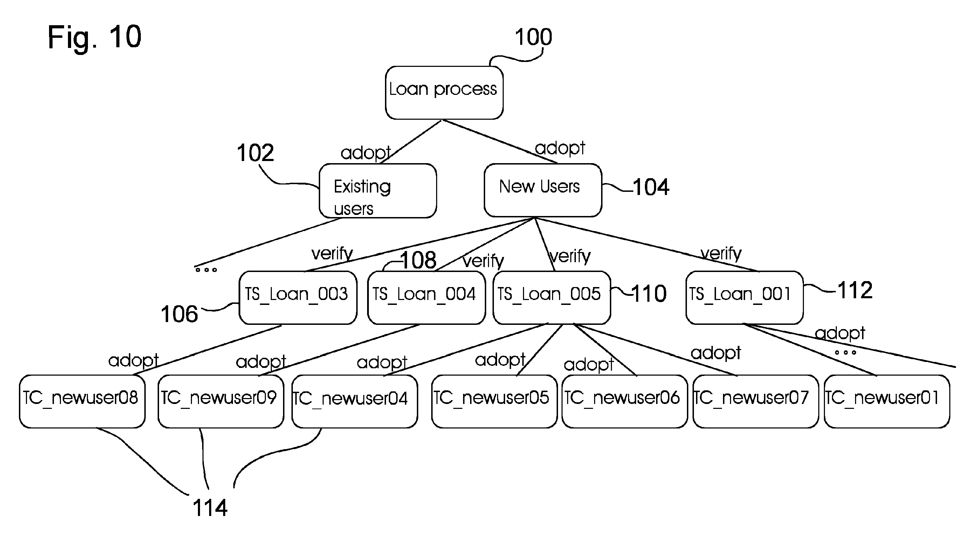

Fig. 10 shows a diagram of different development artifacts of the example software development project and their dependencies. The shown development artifacts constitute only a part of the development artifacts described above. As shown in fig. 10, an artifact 100 of the type business requirement by the name "loan process" is adopted by two development artifacts 102, 104 of the functional specification type labelled "existing users" and "new users".

The "new users" functional specification artifact 104 is verified, in the example shown, by four artifacts 106, 108, 110, 112 of the test scenario type.

The artifacts 106, 108, 110, 112 of the test scenario type are adopted by artifacts 114 of the test case type.

For the above-described individual development artifacts and dependencies between them surrogates and traceability links are stored in the traceability management storage 52.

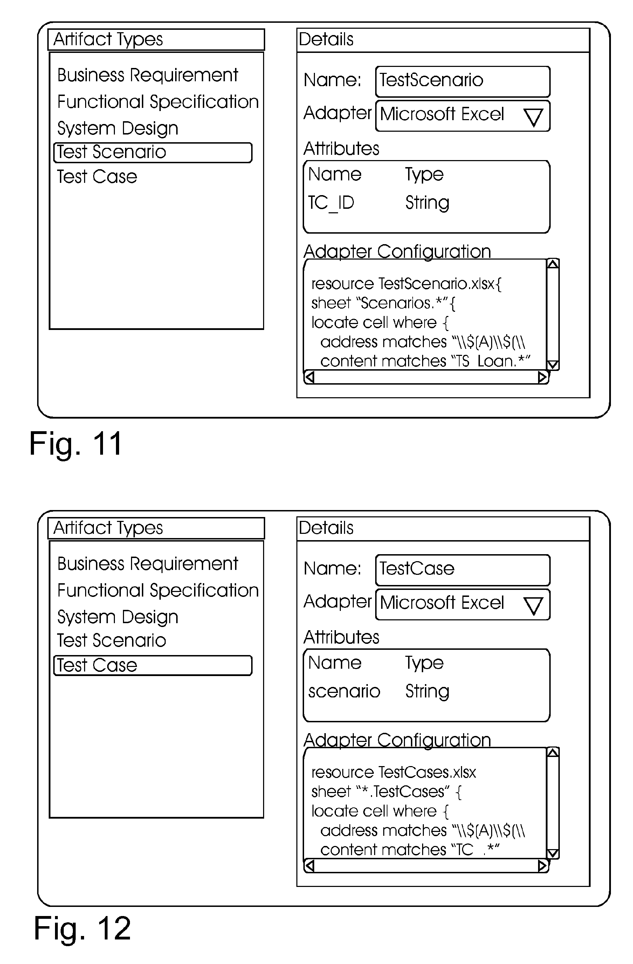

Fig. 11 shows a screen for the definition of a surrogate type for test scenario artifacts 114. To the left of the screen, the artifact type is chosen among the available pre-defined artifact types. To the right of the screen shown in fig. 10, details of the artifact type are defined, such as the name.

Further, the adapter may be selected. As described above, test scenarios may be stored in Excel files. Accordingly, the adapter for an artifact of the test scenario type may be set to "Microsoft Excel" as shown in fig. 10.

Further, for artifacts of the test scenario type, an attribute by the name TC_ID is defined to be of the type string. This attribute refers to the identifier used in the above-given definition of test scenarios.

Further, an adapter configuration is defined for the test scenario artifact type. The adapter configuration comprises an attribute extraction rule as a set of instructions to extract a portion of the artifact content to automatically obtain a value for the attribute (TC_ID in the example). The instructions in the adapter configuration specify the exact location of a portion of the artifact content within the storage, i.e. in the present example within the spreadsheet. An example of an adapter configuration would be

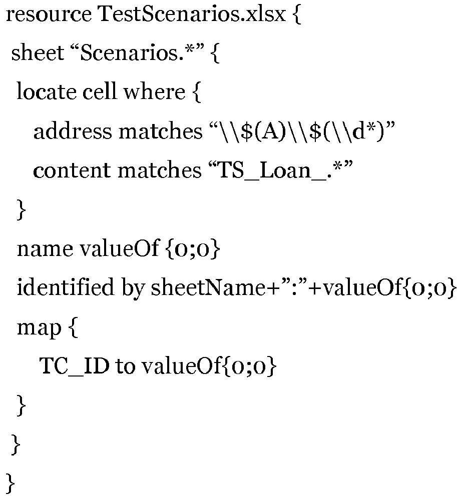

By these instructions, the adapter is configured to access the file resource TestScenarios.xlsx, select a sheet from the spreadsheet file whose label matches the pattern "Scenarios", and locate the cells in this sheet in column A that start with "TS_Loan_". The surrogate attribute TC_ID is then mapped to the value identifying as shown in the above table of test scenarios, the TC_ID of the individual artifacts of the test scenario type (TS_Loan_001, TS_Loan_002,...).

By these instructions, surrogates for artifacts 106, 108, 110, 112 of the test scenario type may be automatically generated and the surrogate attribute TC_ID may be automatically derived from the artifact content.

Fig. 12 shows a screen for the definition of the test case artifact type. Since test cases are also stored in spreadsheet files, the same adapter "Microsoft Excel" is used as explained above for the test scenario type surrogates. Surrogates of the test case type comprise an attribute "scenario" of the type string.

An adapter configuration may be defined as follows:

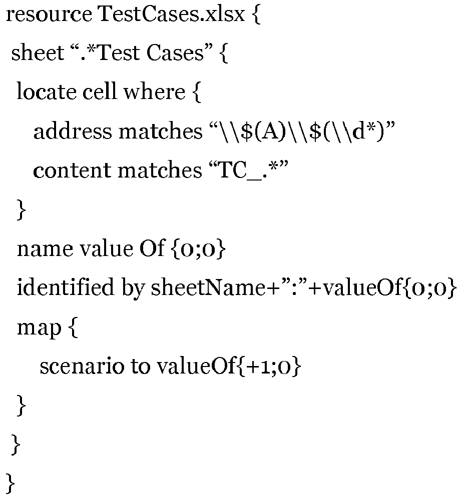

The above instructions access the file resource TestCases.xlsx and select the sheet matching ".*Test Cases". Within this sheet, cells are identified where in column A the content matches the expression "TC_.*". The surrogate attribute "scenario" of the test case surrogate is mapped to the value retrieved from the cell to the right of the found TC_* identifier. For the example resource shown in Fig. 7, the attribute with the label "scenario" of the test case type surrogate 86 thus obtains the string value "TS_Loan_001".

Thus, artifacts of the test case type may be automatically created. From the artifact content, the value of the attribute "scenario" may be extracted by the above instructions (TS_Loan_001, TS_Loan_002, etc.).

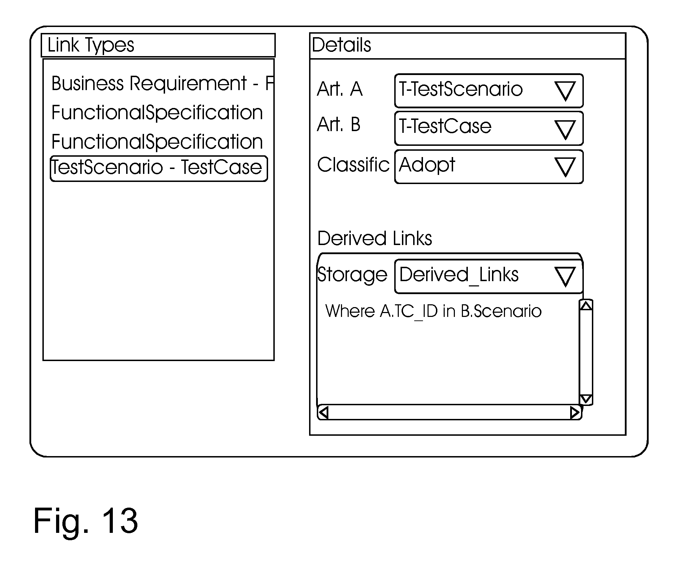

Fig. 13 shows an example of a screen for definition of a traceability link. To the left of the screen shown in fig. 13, different link types may be selected, comprising business requirement - functional specification, functional specification - system design, functional specification - test scenario, and test scenario - test case.

In the example shown, the last mentioned type test scenario - test case of a traceability link is selected. To the right of the screen shown in fig. 13, artifact types of the two linked artifacts are chosen as test scenario for artifact A and test case for artifact B. The classification of the traceability link between these types of artifacts is "adopt", as shown in fig. 8.

The definition of the traceability link type shown in fig. 13 also includes a rule for automatically deriving traceability links. In the example given, the traceability link derivation rule
where A.TC_ID in B.Scenario
comprises instructions to access the attributes TC_ID and scenario of the first and second surrogates A, B. The rule further includes a relational operator (in) testing whether the value of one attribute is contained in the other.

By using the above definition, traceability links between surrogates of the test scenario and test case types may be automatically generated. In application of the above rule, surrogates 106, 108, 110, 112 of the test scenario type and surrogates 114 of the test case type stored in traceability management storage 52 are accessed and the stored attribute values are compared as given by the relational operator in the rule. If the condition thus defined is fulfilled, a dependency of the type "adopt" is determined and a traceability link may be automatically generated and stored in traceability management storage 52.

As the skilled person will appreciate, the above-described example of a software development project is a very simple example comprising only few types of artifacts and few artifacts of each type. Further, a dependency between artifacts of the test scenario and test case is determined based on only one attribute value of each surrogate. For other software development projects, a larger number of artifacts types and artifacts may be present, and surrogates may comprise more and other attributes. Also, the adapter configuration instructions and the rules for derived links may be defined differently, and, if appropriate, may be more complex than in the given example.

Still, it is already visible for the simple example how much the creation of surrogates and traceability links based on the automatic derivation described above facilitates the documentation and maintenance of traceability information.

## Claims

1. Method for managing traceability links in a development project, including
- storing, in a traceability management storage (52), a plurality of surrogates (54, 56) for development artifacts (40, 46),
- said development artifacts including artifact content of at least one of the types chosen from requirement, design, code, test, test result, or issue,
- said development artifacts (40, 46) being of a plurality of different storage format types editable and/ or visualizable by associated development tools,
- said development artifacts (40, 46) being stored in one or more artifact storage (44, 50) different from said traceability management storage (52),
- said surrogates comprising at least a first surrogate (54) for a first development artifact (40) and a second surrogate (56) for a second development artifact (46),
- each of said surrogates (54, 56) comprising at least an identification of the associated development artifact (40, 46), a type of the artifact content of the associated development artifact (40, 46), and a storage format type of the associated development artifact, said surrogates (54, 56) not comprising the entire artifact content of the associated development artifact (40, 46),
- and storing at least one traceability link (60) in said traceability management storage (52), said traceability link (60) comprising at least a pointer to said first and second surrogates (54, 56).

2. Method according to claim 1, including
- creating said surrogates (54, 56) and/ or said traceability link (60) for storage in said traceability management storage (52) by read-only access to an associated development artifact (40, 46).

3. Method according to claim 1 or 2, wherein
- said surrogates (54, 56) contain one ore more attributes representative of at least a portion of said artifact content.

4. Method according to claim 3, including
- providing an attribute extraction rule,
- applying said attribute extraction rule to automatically extract said one or more attributes from said artifact content.

5. Method according to one of the above claims, further including
- accessing said development artifacts (40, 46) through at least one adapter (62, 64) specific to its storage format type or through an access interface of a development tool associated with its storage format type.

6. Method according to one of the above claims, further including
- accessing relationship information (58, 74) stored in an artifact storage (66, 70), said relationship information linking at least two development artifacts (40, 46; 68, 72) editable and/or visualizable by the same associated development tool, and
- storing a traceability link (58, 74) between said two development artefacts (40, 46; 68, 72) in said traceability management storage (52).

7. Method according to one of the above claims, further including
- accessing at least one development tool through an access interface to obtain information about a current viewing and/or editing focus within said development tool on at least one development artifact (86),
- obtaining and displaying information about at least one development artifact (90) linked to said development artifact (86) within the focus.

8. Method according to one of the above claims, further including
- displaying at least one representation of a development artifact (86) editable and/or visualizable by a development tool associated with its storage format type,
- receiving a user input directed to said representation,
- accessing said development tool through an access interface to at least visualize said development artifact (86).

9. Method according to one of the above claims, further including
- providing at least one derivation rule for deriving a traceability dependency between development artifacts, said derivation rule including instructions to access artifact content of said development artifacts and/or to access said surrogates corresponding to said development artifacts to identify a traceability dependency between at least two of said development artifacts,
- applying said derivation rule to automatically identify a traceability dependency,
- and storing a traceability link between surrogates associated with said development artifacts if said traceability dependency is identified.

10. Method according to claim 9, wherein
- said derivation rule accesses attributes stored in said surrogates.

11. Method according to claim 9 or 10, wherein
- said derivation rule comprises at least one condition including a relational operator to identify said traceability dependency.

12. Method for tracing dependencies of development artifacts in a development project, including,
- managing traceability links (60) according to one of the above claims,
- detecting a change in at least one development artifact (40a), and
- identifying at least one traceability link (60) connecting said changed development artifact to a connected development artifact, and/or identifying at least one connected development artifact (40, 46) connected to said changed development artifact by at least one traceability link (50),
- and setting a flag indicating said traceability link (60) and/or said connected development artifact (40, 46) as suspects for a necessary adaptation.

13. Method according to claim 12, wherein
- said surrogates contain change-relevant attributes,
- and said flag for said traceability link (60) and/or for said connected development artifact (40, 46) is set only if at least one of said change-relevant attributes of said changed artifact has changed.

14. Computer-readable medium storing executable program code instructing a computer to manage traceability links in a software development project by
- storing, in a traceability management storage (52), a plurality of surrogates (54, 56) for development artifacts (40, 46),
- said development artifacts including artifact content of at least one of the types chosen from requirement, design, code, test, test result, or issue,
- said development artifacts (40, 46) being of a plurality of different storage format types editable and/ or visualizable by associated development tools,
- said development artifacts (40, 46) being stored in one or more artifact storage (44, 50) different from said traceability management storage (52),
- said surrogates comprising at least a first surrogate (54) for a first development artifact (40) and a second surrogate (56) for a second development artifact (46),
- each of said surrogates (54, 56) comprising at least an identification of the associated development artifact (40, 46), a type of the artifact content of the associated development artifact (40, 46), and a storage format type of the associated development artifact (40, 46), said surrogates (54, 56) not comprising the entire artifact content of the associated development artifact (40, 46),
- and storing at least one traceability link (60) in said traceability management storage (52), said traceability link (60) comprising at least a pointer to said first and second surrogates (54, 56).
